# EUROPEAN PATENT APPLICATION

(11) **EP 0 957 195 A2**
(43) Date of publication of application: **17.11.1999**
(21) Application number: 98308197.7
(22) Date of filing: 08.10.1998
(51) Int. Cl.: D06F 37/06

(54) **Washing machine**

(30) Priority: 13.05.1998 KR 9817118
(71) Applicant: SAMSUNG ELECTRONICS CO., LTD., Suwon-City, Kyungki-do (KR)
(72) Inventor: Kim, Ji-Sung, Bundang-gu, Sungnam-city, Kyungki-do (KR)
(74) Representative: Geary, Stuart Lloyd

(57) **Abstract**

A washing machine is disclosed and includes a drum (20) having an agitator (26) for agitating laundry (70) during rotation of the drum (20) about a horizontal axis. The agitator is configured to urge laundry (70) towards the back of the drum (20) to reduce vibration of the drum (20) caused by an uneven distribution of laundry (70) within it.

## Description

The present invention relates to a washing machine including a drum having an agitator for agitating laundry during rotation of the drum about a horizontal axis.

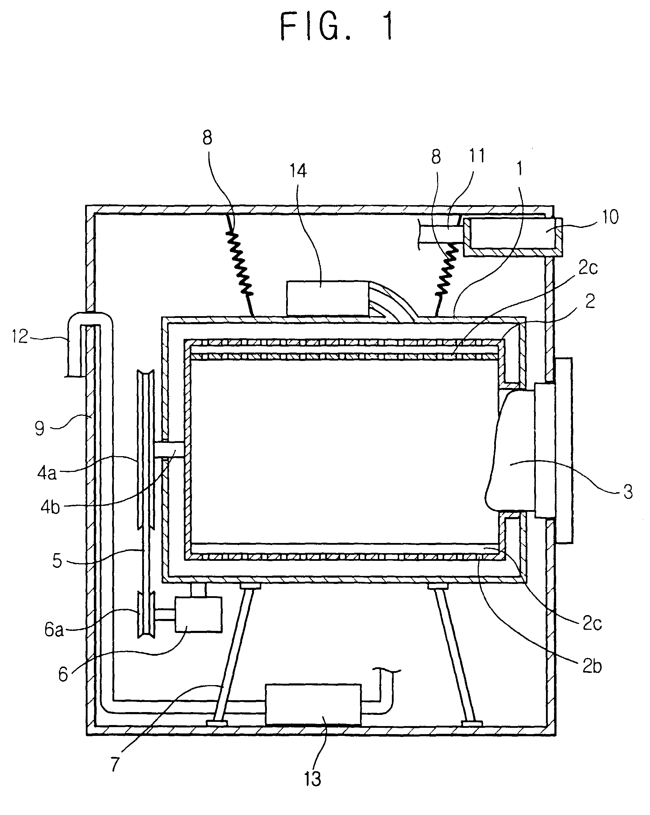

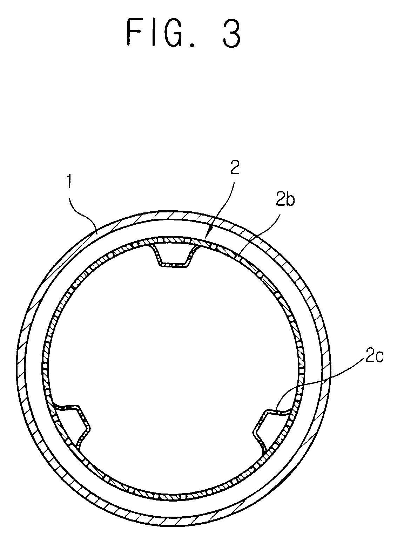

A conventional washing machine is illustrated in Figures 1 to 3 and comprises a housing 9, a tub 1 suspended within the housing 9 on a plurality of dampers 7 and springs 8, and a drum 2 rotatably mounted within the tub 1.

A shaft 4b extends from the centre of the rear face of the drum 2 through an opening in the tub 1. A pulley 4a is mounted on the free end of the shaft 4b. A plurality of drain holes 2b are provided in the side walls of the drum 2 to enable water to pass between the tub 1 and drum 2.

A motor 6 for rotatably driving the drum 2 is mounted on the tub 1, and has a pulley 6a. A drive belt 5 extends between the two pulleys 4a,6a so that when the motor operates, drive is transmitted through the belt 5 to rotate the drum 2.

A drain pump 13 for draining water from the drum 2 after a wash or rinse cycle is complete is provided within the housing 9. The drain pump 13 discharges the water from the drum 2 through a drain pipe 12. A heater 14 is mounted on the side of the tub 1, and a door is provided on the housing 9 which can be opened to gain access to the interior of the drum 2.

A water supply pipe 11 for supplying water to the drum 2 extends into the housing 9 from a mains supply and terminates in a detergent container 10. Water supplied through the water supply pipe 11 flows into the drum 2 via the detergent container 10 so that detergent placed in the detergent container 10 is dissolved in the water supplied to the drum 2.

The washing machine generally performs three cycles, washing, rinsing and spin-drying. To perform the wash cycle, laundry 15 is first placed in the drum 2, and detergent is placed in the detergent container 10a. A wash program is then selected using a control panel (not shown). A microprocessor (not shown) controls the wash cycle in accordance with the user's preset requirements.

In the wash cycle, water is supplied to drum 2 through the water supply pipe 11 and detergent container 10. As the drum 2 rotates in response to operation of the motor 6 the wash cycle is performed and the laundry 15 is agitated to clean it thoroughly.

To agitate the laundry 15 effectively when the drum 2 rotates, a plurality of lifters 2c are provided on the inner surface of the drum 2. The lifters 2c protrude inwardly towards the axis of rotation of the drum from its inner surface and each of them comprise an axially extending rib. The lifters 2c lift the laundry and allow it to drop as the drum 2 rotates.

When the wash cycle is complete, the rinse cycle is performed followed by the spin-drying cycle. In the spin-drying cycle, the drum 2 is rotated at a high velocity to force the water out of the laundry 15 under centrifugal force generated by rotation of the drum 2. Vibration is generated whilst the drum 2 rotates and this is suppressed by the dampers 7 and the springs 8.

In a conventional washing machine of the type described above, when the drum 2 is full of laundry 15, it is distributed evenly and imbalanced rotation of the drum 2 caused by uneven distribution of laundry within the drum does not occur, so only very little vibration is generated. However, if only a small amount of laundry is in the drum 2, for example, less than 2kg, the drum can become imbalanced because the laundry concentrates in one area of the drum 2. This can cause considerable vibration of the drum 2.

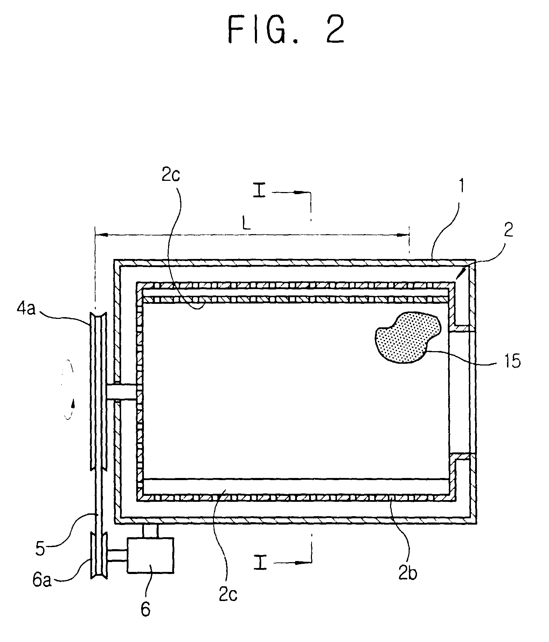

The aforementioned problem is exacerbated if the laundry 15 is close to the door 3, as shown in Figure 2, because the rotational moment of the laundry with respect to the shaft 4b is increased which in turn increases vibration of the drum 2.

A washing machine according to the present invention is characterised in that the agitator is configured to urge the laundry towards the back of the drum.

Preferably, the agitator comprises a rib protruding inwardly towards the axis.

The height of the rib in a direction towards the axis preferably reduces towards the back of the drum.

In a preferred embodiment, the height reduces linearly from one end of the rib to the other.

Preferably, the rib is integral with the drum.

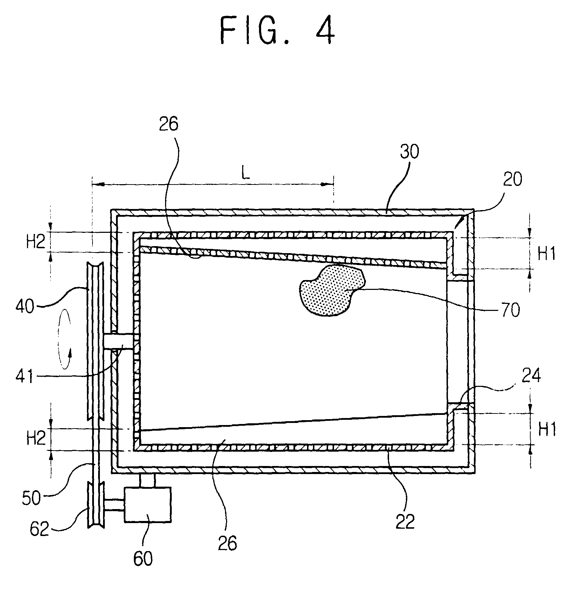

An embodiment of the present invention will now be described, by way of example only, with reference to Figure 4 of the accompanying drawings, in which:
Figure 1 is a sectioned side view of a prior art washing machine;
Figure 2 is a partial enlarged view of the prior art washing machine of Figure 1, which illustrates the operation of the lifters;
Figure 3 is a sectioned view of the prior art washing machine of Figure 2 taken along the line I-I; and
Figure 4 is a partial enlarged sectioned side view of a washing machine according to the present invention.

Referring now to the drawings, Figure 4 illustrates a drum 20 rotatably mounted within a tub 30. A shaft 41 extends from the drum 20 through the tub 30, and a drum pulley 40 is mounted on the free end of the shaft 41. The drum 20 is disposed horizontally and has a horizontal axis of rotation extending through the shaft 41.

A plurality of openings 22 are provided in the walls of the drum 20 to enable water to pass into and out of the drum 20 via the tub 30.

A motor 60 for rotating the drum 20 is mounted on the tub 30, and has a pulley 62 rotatably drivable by motor 60. A drive belt 50 extends between the motor pulley 62 and the drum pulley 40 to enable drive to be transmitted from the motor 60 to the drum 20.

A plurality of rib shaped lifters 26 protrude inwardly from the side walls of the drum 20 and extend parallel to the horizontal axis. A number of lifters are provided which are disposed symmetrically around the circumference of the drum 20.

Each lifter 26 extends from the back to the front of the drum 20. The upper edge of each lifter 26 is slanted with respect to the horizontal axis so that its height (H1) furthest from the face of the drum 20 from which the shaft 41 extends (i.e. furthest from the back of the drum) is greater than its height (H2) close to the face of the drum from which the shaft 41 extends (i.e. closest to the back of the drum), as shown in Figure 4.

In a washing machine having the above-described construction, as each lifter protrudes further into the drum 20 at one end than the other, they force the laundry towards the back of the drum 20. This reduces the rotational moment of the laundry 70 and reduces vibration caused by uneven distribution of laundry within the drum 20.

In the above described embodiment, the rib shaped lifters 26 extend along the overall length of the drum 20. However, it is possible that a plurality of shorter lifters can be disposed in a line. In such a case, the end of each lifter 26 nearest the front of the drum 20 protrudes further into the drum 26 than the end nearest the back of the drum 20.

The lifters 26 can have a number of different shapes but must be capable of moving the laundry 70 toward the back of the drum 20. The number of the lifters 26 and their positioning can also be varied.

## Claims

1. A washing machine including a drum (20) having an agitator (26) for agitating laundry (70) during rotation of the drum (20) about a horizontal axis, **characterised in that** the agitator (26) is configured to urge the laundry (70) towards the back of the drum (20).

2. A washing machine according to claim 1 wherein the agitator (26) comprises a rib protruding inwardly towards the axis.

3. A washing machine according to claim 2 wherein the height of the rib (26) in a direction towards the axis reduces gradually towards the back of the drum (20).

4. A washing machine according to claim 3 wherein the height reduces linearly from one end of the rib (26) to the other.

5. A washing machine according to any of claims 2 to 4 wherein the rib (26) is parallel to the axis.

6. A washing machine according to any of claims 2 to 5 wherein the rib (26) is integral with the drum (20).

7. A washing machine according to any of claims 2 to 5 wherein drum (20) includes a plurality of ribs (26) disposed symmetrically about the drum (20).

8. A drum type washing machine comprising a tub being suspended in a body, a drum being installed in said tub, said drum being capable of rotating with respect to a horizontal axis, a driving device being installed on a side of said tub, said driving device for rotating said drum, and a plurality of lifters protruding inward from an inner side of said drum, wherein a part of said lifter far from said driving device protrudes so as to be higher than a part of said lifter close to said driving device.

9. The drum type washing machine as claimed in claim 8 wherein said lifter has a shape of a rib disposed in parallel with the horizontal axis.

10. The drum type washing machine as claimed in claim 9 wherein an upper edge of said lifter is tilted at a predetermined angle with respect to the rotational axis.

11. The drum type washing machine as claimed in claim 10 wherein said lifter is extended from one end of said drum to the other end of said drum.
